# EUROPEAN PATENT SPECIFICATION

(11) **EP 2 401 516 B1**
(45) Date of publication and mention of the grant of the patent: **07.03.2018**
(21) Application number: 10704962.9
(22) Date of filing: 10.02.2010
(51) Int. Cl.: F16C 19/55, F16C 25/08, F16C 35/077, F16C 35/12, H02K 5/173, F04D 29/056

(54) **ROTOR ASSEMBLY**
ROTORANORDNUNG
AGENCEMENT DE ROTOR

(30) Priority: 24.02.2009 GB 0903053
(43) Date of publication of application: 04.01.2012
(73) Proprietor: Dyson Technology Limited, Malmesbury, Wilts SN16 0RP (GB)
(72) Inventor: MOCKRIDGE, Richard, Malmesbury Wiltshire SN16 0RP (GB); GREETHAM, Stephen, Malmesbury Wiltshire SN16 0RP (GB); CHILDE, Matthew, Malmesbury Wiltshire SN16 0RP (GB)
(74) Representative: Lobban, Colin
(86) International application number: PCT/GB2010/050211
(87) International publication number: WO 2010/097608

(56) References cited:
- EP-A1- 1 557 578
- EP-A2- 2 000 675
- WO-A1-2007/021838
- FR-A1- 2 483 024
- FR-A1- 2 569 771
- US-A- 3 759 592
- US-A- 4 907 897
- US-A- 5 069 603
- US-A- 5 961 222
- US-B1- 6 246 137

## Description

The present invention relates to a rotor assembly for a high-speed compressor.

The rotor assembly of many high-speed compressors includes a shaft mounted to a housing by a pair of bearings, each bearing located at opposite ends of the shaft. The provision of bearings at opposite ends of the shaft affords good stability. However, the pathway between the two bearings through the housing is relatively long and typically traverses several distinct components of the compressor. As a consequence of dimensional and geometric tolerances, it is generally difficult to ensure that the rotor assembly is accurately aligned within the housing. Additionally, for high-speed compressors, the bearings are ideally preloaded to prevent skidding. However, owing to the tolerance stack associated with the pathway between the bearings, it is difficult to ensure that both bearings are preloaded with a force that prevents skidding without being excessive, which would otherwise result in poor bearing performance.

US5069603 describes a vacuum pump having a spindle that comprises a pair of ceramic bearings supported on a shaft. Sleeves under the influence of a compression spring apply a preload to the bearings. The bearings, the sleeves and the spring are fixed within a spindle sleeve.

EP1557578 describes a weatherproof spindle having a tubular housing that surrounds a shaft. A locating bearing and a non-locating bearing are located within the housing and are spaced apart by a spring acting between the two bearings.

FR2569771 describes a bearing device for a turbocharger. The bearing device comprises a pair of ball bearings supported by an oil-film damper that floats within a bearing housing. A spring disposed between the bearings applies a preload to the outer races.

In a first aspect, the present invention provides a rotor assembly comprising a shaft to which are mounted an impeller, a rotor core and a bearing cartridge, the bearing cartridge being mounted between the impeller and the rotor core and comprising a pair of bearings, a spring applying a preload to each of the bearings, and a sleeve surrounding the bearings, characterised in that the sleeve has a coefficient of thermal expansion substantially matching that of the shaft.

The rotor assembly is therefore supported by two preloaded bearings. The bearings are ideally spaced by a predetermined amount and the spring has a predetermined spring constant. Consequently, the two bearings are preloaded with the same, well-defined force. By preloading the bearings with a force that prevents skidding without being excessive, the lifetime of the bearings is increased.

Furthermore, the sleeve is formed of a non-magnetic material. As a consequence, the sleeve does not present a partial short to the magnetic circuit of the rotor core and stator. The shaft is formed of a soft magnetic material. Accordingly, the shaft reduces the reluctance of the magnetic circuit.

The bearing cartridge provides a single fastening over which the rotor assembly may be secured to a housing, frame or the like. In providing a single fastening, securement of the rotor assembly is both easier and cheaper than that for a rotor assembly having bearings located at opposite ends of the shaft.

The sleeve acts to align the two bearings and in particular the outer races of the bearings. Consequently, when the rotor assembly is secured to a housing, alignment of the shaft within the housing is assured. The sleeve also acts as a heat sink for the bearings, thus prolonging the life of the bearings.

In mounting the impeller and rotor core on opposite sides of the bearing cartridge, a compact design of rotor assembly is achieved. Moreover, the rotor assembly may be dynamically balanced as a complete unit prior to inclusion within a compressor. This in contrast to other rotor assemblies that must be assembled within the compressor and cannot therefore be dynamically balanced as a complete unit. Furthermore, in having the impeller and rotor core located on opposite sides of the bearing cartridge, radial loading of the two bearings may be more evenly balanced. Indeed, to this end, the centre of mass of the rotor assembly is preferably located at a point within the bearing cartridge.

The sleeve has a coefficient of thermal expansion substantially matching that of the shaft. Consequently, thermal expansion of the shaft and sleeve does not adversely affect the loading of the bearings. Additionally, the sleeve may be formed of an electrical insulating material. This then has the advantage that the sleeve is not susceptible to inductive heating that might otherwise arise during use of the rotor assembly. The rotor assembly is thus ideally suited to high-speed applications since the sleeve continues to serve as an effective heat sink for the bearings.

Advantageously, the rotor assembly comprises a spacer that surrounds the shaft, separates the two bearings and contributes to the shaft stiffness. Consequently, for a rotor assembly having a particular critical speed, a thinner, less massive shaft may be used. Moreover, the spacer ensures that the bearings are spaced by a predetermined amount, thereby ensuring a well-defined bearing preload. In order to minimise any possible failure of the bearing cartridge due to thermal expansion, the bearings and the spacer preferably have a coefficient of thermal expansion substantially matching that of the shaft and sleeve.

The bearings may be preloaded by one or more springs located between the spacer and the sleeve. However, a single coil spring is preferably employed that surrounds the spacer. This then makes assembly of the rotor assembly cheaper and easier.

When the rotor assembly is in use, rotation of the impeller may cause a reduction in pressure at the end of the bearing cartridge adjacent the impeller. This reduction in pressure may cause dirt-laden fluid to be drawn through the bearing cartridge via annular gaps in the bearings. The rotor assembly therefore preferably comprises a dirt cap that covers the annular gap in the bearing adjacent the rotor core. For example, the dirt cap may be secured to the shaft adjacent the bearing and include a flange that extends radially outward from the shaft to cover the annular gap. Consequently, as fluid is drawn towards the bearing cartridge, any dirt carried by the fluid is obstructed from entering the bearing.

In order that the present invention may be more readily understood, an embodiment of the invention will now be described, by way of example, with reference to the accompanying drawing, in which:

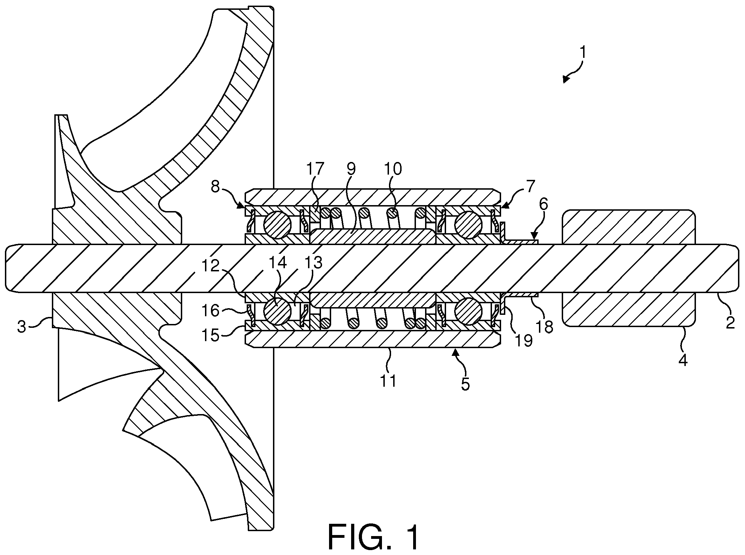

Figure 1 is a sectional view of a rotor assembly in accordance with the present invention.

The rotor assembly 1 of Figure 1 comprises a shaft 2 to which are mounted an impeller 3, a rotor core 4, a bearing cartridge 5, and a dirt cap 6.

The impeller 3 is mounted to a first end of the shaft 2. The impeller 3 illustrated in Figure 1 is a centrifugal impeller. However, other types of impeller may equally be employed according to the intended application of the rotor assembly 1.

The rotor core 4 is mounted to a second end of the shaft 2. The rotor core 4 is formed of a hard or soft magnetic material. The shaft 2 is formed of a soft magnetic material which then reduces the reluctance of the magnetic circuit. Nevertheless, a non-magnetic material might alternatively be used for the shaft 2.

The bearing cartridge 5 is located between the impeller 3 and the rotor core 4. The bearing cartridge 5 comprises a pair of bearings 7,8, a spacer 9, a spring 10, and a sleeve 11.

The bearings 7,8 are identical, with each comprising an inner race 12, a cage 13 supporting a plurality of ball bearings 14, an outer race 15, and a pair of shields 16 secured to the outer race 15 at opposite ends of the bearing 7,8.

The spacer 9 is cylindrical and serves to space the two bearings 7,8 by a predetermined amount. In addition to spacing the two bearings 7,8, the spacer 9 contributes to the stiffness of the shaft 2. Consequently, the material and thickness of the spacer 9 may be selected to achieve a desired shaft stiffness. In spite of the aforementioned advantages, the spacer 9 may be omitted from the bearing cartridge 5. A predetermined spacing between the two bearings 7,8 may then be achieved by alternative means during assembly of the bearing cartridge 5.

The spring 10 is a coil spring that surrounds the spacer 9 and applies a force to the outer races 15 of the bearings 7,8. Since the spacer 9 has a predetermined length and the spring 10 has a predetermined spring constant, each of the bearings 7,8 is preloaded with the same well-defined force. In the particular embodiment illustrated in Figure 1, the spring 10 is significantly thicker than the outer races 15 of the bearings 7,8. In order that the force of the spring 10 is transferred to the outer races 15 in the axial direction, a circular shim 17 is provided between the spring 10 and each of the outer races 15.

The sleeve 11 surrounds and is secured to the two bearings 7,8. The sleeve 11 serves three purposes. First, the sleeve 11 provides an outer surface over which the bearing cartridge 5 may be secured (e.g. by press-fitting or gluing) to a housing, frame or the like. Second, the sleeve 11 acts as a heat sink for the bearings 7,8. Since heat generated by the bearings 7,8 is carried away by the sleeve 11, the lifetime of the bearings 7,8 is prolonged. Third, as will now be described, the sleeve 11 acts to align the bearings 7,8.

In mounting the bearings 7,8 to the shaft 2, the inner races 12 of the bearings 7,8 are coaxially aligned. Although the inner races 12 are aligned, the outer races 15 are not. This is because the outer race 15 of each bearing 7,8 has a small degree of play relative to the inner race 12. When the outer races 15 are preloaded, the force applied by the spring 10 is not normally uniformly distributed around each outer race 15. As a result, the outer races 15 are not normally aligned. In particular, the longitudinal axis of one outer race may be radially displaced and/or tilted with respect to the longitudinal axis of the other outer race. If the sleeve 11 were omitted from the bearing cartridge 5, and the rotor assembly 1 were mounted to a housing via the bearings 7,8, any misalignment in the outer races 15 would result in misalignment of the shaft 2 within the housing. This in turn would have serious consequences for the alignment of the rotor core 4 relative to a stator, as well as the alignment of the impeller 3 relative to a shroud and diffuser held within the housing. In securing a sleeve 11 over the outer races 15 of the two bearings 7,8, the outer races 15 are brought into coaxial alignment. Consequently, when the bearing cartridge 5 is mounted to the housing, correct alignment of the shaft 2 within the housing is assured.

When the rotor assembly 1 is in use, the sleeve 11 of the bearing cartridge 5 is exposed to a varying magnetic field from the rotor core 4 and/or the stator used to drive the rotor core 4. In order that the sleeve 11 is not subjected to inductive heating and does not present a partial short-circuit to the magnetic circuit of the rotor core 4 and stator, the sleeve 11 is formed of a non-magnetic, electrically insulating material. Nevertheless, there may be applications for which a magnetic and/or electrically conducting material may be used, e.g. if the magnetic field strength of the rotor core 4 and/or stator is relatively weak, if the rotor assembly 1 rotates at relatively low speed, if the bearing cartridge 5 is spaced sufficiently far from the rotor core 4, or if the mass of the sleeve 11 exposed to the magnetic field is relatively small.

The components of the bearing cartridge 5 (i.e. the bearings 7,8, spacer 9, spring 10 and sleeve 11) have coefficients of thermal expansion that substantially match that of the shaft 2. This then prevents failure of the bearing cartridge 5 due to uneven thermal expansion. Nevertheless, thermal matching of one or more components may not be necessary, particularly if the temperature range over which the rotor assembly 1 operates is relatively small. Since the bearings 7,8 are secured to the shaft 2 and sleeve 11, uneven thermal expansion of the shaft 2 and sleeve 11 will cause the inner race 12 of each bearing 7,8 to move relative to the outer race 15. This in turn may lead to adverse changes in the preload of the bearings 7,8. By ensuring that at least the shaft 2 and sleeve 11 are thermally matched, adverse changes in the preload may be averted.

The dirt cap 6 is secured to the shaft 2 adjacent the end of the bearing cartridge 5 proximate the rotor core 4. The dirt cap 6 comprises a collar 18 having a flange 19 formed at one end. The collar 18 is secured to the shaft 2 such that the flange 19 abuts the inner race 12 of the bearing 7. The flange 19 extends radially outward from the shaft 2 to cover the annular gap in the bearing 7 between the inner race 12 and the shield 16, the advantage of which will now be described.

When the rotor assembly 1 is in use, rotation of the impeller 3 creates a reduction in pressure beneath the impeller 3. The pressure at the rotor core 4, however, is unchanged. Consequently, a pressure gradient is created along the length of the bearing cartridge 5 that encourages fluid to flow through the bearing cartridge 5. Fluid enters the bearing cartridge 5 at the gap between the inner race 12 and the shield 16 of the bearing 7 adjacent the rotor core 4. Any dirt carried by the fluid is likely to be trapped by the bearing 7 and thus impair performance and ultimately lead to premature failure of the bearing 7. The dirt cap 6 reduces the amount of dirt entering the bearing 7 by forcing the fluid to follow a convoluted pathway around the flange 19. This convoluted pathway causes most dirt to be thrown radially outward away from the bearing 7. In addition, the space between the flange 19 and the bearing 7 is sufficiently small that, as the flange 19 rotates relative to the shield 16, a reduced pressure region is created between the flange 19 and bearing 7. Consequently, the pressure gradient across the bearing cartridge 5, and thus the flow of fluid through the bearing cartridge 5, is reduced. In reducing the amount of dirt entering the bearing 7, the lifetime of the bearing is increased, particularly when the rotor assembly 1 is employed in dirt-laden environments.

Although each bearing 7,8 is provided with a pair of shields 16, the interior of the bearing cartridge 5 is not directly exposed to the external environment. Accordingly, the shield 16 at the end of each bearing 7,8 adjacent the spacer 9 and spring 10 may be omitted. Nevertheless, each shield 16 provides resistance to the flow of fluid through the bearing cartridge 5 and thus the provision of shields 16 at either end of each bearing 7,8 aids in minimising the amount of dirt entering the bearing cartridge 5.

In the embodiment described above, the shields 16 are secured to the outer race 15 of each bearing 7,8. The dirt cap 6 therefore covers an annular gap formed between the inner race 12 and the shield 16 of the bearing 7 adjacent the rotor core 4. Alternative designs of bearing 7 are, however, possible in which the shields 16 are sealed to the inner race 12 or omitted altogether. As a result, an annular gap may alternatively exist between the shield 16 and the outer race 15 or between the inner race 12 and the outer race 15. Should an alternative design of bearing be employed, the diameter of the flange 19 may be adapted such that the dirt cap 6 continues to cover any gap.

The rotor assembly 1 of the present invention offers several advantages over known rotor assemblies, particularly those in which a shaft is supported by end bearings. With the rotor assembly 1 of the present invention, the shaft 2 is supported by two bearings 7,8 that are spaced apart to provide good stability. Any reduction in stability as a result of supporting the shaft 2 at its centre rather than at its ends may be compensated by the spacer 9, which contributes to the shaft stiffness. The bearings 7,8 of the rotor assembly 1 are preloaded with the same, well-defined force, thus prolonging the life of the bearings. This is in contrast to rotor assemblies having a shaft supported by end bearings, in which the tolerance stack associated with the bearings makes accurate preloading difficult. A further advantage of the rotor assembly 1 lies in the provision of the sleeve 11, which serves to align the bearings 7,8. Consequently, when the rotor assembly 1 is secured to a housing, alignment of the shaft 2 within the housing is assured. Again, this is in contrast to rotor assemblies having a shaft supported by end bearings, in which the tolerance stack makes accurate alignment of the shaft within the housing difficult. In addition to aligning the bearings 7,8, the sleeve 11 acts as heat sink for the bearings 7,8, thus further prolonging their life. The bearing cartridge 5 provides a single fastening over which the rotor assembly 1 may be secured to a housing. Consequently, securement of the rotor assembly 1 is both easier and cheaper than that for rotor assemblies having end bearings. In mounting an impeller and a rotor core to a shaft on opposite sides of a bearing cartridge, the present invention provides a compact design of rotor assembly. Moreover, since two masses are located on opposite sides of the bearing cartridge, radial loading of the bearings may be more evenly balanced, thus prolonging bearing life. This in contrast to other rotor assemblies in which the bearings typically undergo different radial loading. Finally, the rotor assembly 1 of the present invention may be dynamically balanced as a complete unit (i.e. shaft, impeller, rotor core and bearing cartridge) prior to inclusion within a compressor. This in contrast to other rotor assemblies that must be assembled within the compressor and cannot therefore be dynamically balanced as a complete unit.

## Claims

1. A rotor assembly (1) comprising a shaft (2) to which are mounted an impeller (3), a rotor core (4) and a bearing cartridge (5), the bearing cartridge (5) being mounted between the impeller (3) and the rotor core (4) and comprising a pair of bearings (7,8), a spring (10) applying a preload to each of the bearings (7,8) and a sleeve (11) surrounding the bearings (7,8), **characterised in that** the sleeve (11) has a coefficient of thermal expansion substantially matching that of the shaft (2), the sleeve (11) is formed of a non-magnetic material, and the shaft (2) is formed of a soft magnetic material.

2. A rotor assembly as claimed in claim 1, wherein the sleeve (11) is formed of an electrically insulating material.

3. A rotor assembly as claimed in any one of the preceding claims, wherein the centre of mass of the rotor assembly (1) is located within the bearing cartridge (5).

4. A rotor assembly as claimed in any one of the preceding claims, wherein the bearing cartridge (5) comprises a spacer (9) that surrounds the shaft (2), separates the two bearings (7,8) and contributes to the shaft stiffness.

5. A rotor assembly as claimed in claim 4, wherein the bearings (7,8) and the spacer (9) have coefficients of thermal expansion substantially matching that of the shaft (2).

6. A rotor assembly as claimed in any one of the preceding claims, wherein the rotor assembly (1) comprises a dirt cap (6) that covers an annular gap in the bearing (7) adjacent the rotor core (4), the dirt cap (6) being secured to the shaft (2) and comprising a flange (19) that extends radially outward from the shaft (2) to cover the annular gap.

## Patentansprüche

1. Rotoranordnung (1), die eine Welle (2) umfasst, auf der ein Laufrad (3), ein Rotorkern (4) und ein Lagereinsatz (5) befestigt sind, wobei der Lagereinsatz (5) zwischen dem Laufrad (3) und dem Rotorkern (4) befestigt ist und ein Paar Lager (7, 8), eine Feder (10), die eine Vorbelastung an jedes der Lager (7, 8) anlegt, und eine Hülse (11), die die Lager (7, 8) umgibt, umfasst, **dadurch gekennzeichnet, dass** die Hülse (11) einen Wärmeausdehnungskoeffizienten aufweist, der im Wesentlichen mit dem der Welle (2) übereinstimmt, die Hülse (11) aus einem nicht magnetischen Material gebildet ist und die Welle (2) aus einem weichen magnetischen Material gebildet ist.

2. Rotoranordnung nach Anspruch 1, wobei die Hülse (11) aus einem elektrisch isolierenden Material gebildet ist.

3. Rotoranordnung nach einem der vorhergehenden Ansprüche, wobei sich der Massenmittelpunkt der Rotoranordnung (1) in dem Lagereinsatz (5) befindet.

4. Rotoranordnung nach einem der vorhergehenden Ansprüche, wobei der Lagereinsatz (5) einen Abstandshalter (9) umfasst, der die Welle (2) umgibt, die zwei Lager (7, 8) abtrennt und zur Wellensteifigkeit beiträgt.

5. Rotoranordnung nach Anspruch 4, wobei die Lager (7, 8) und der Abstandshalter (9) Wärmeausdehnungskoeffizienten aufweisen, die im Wesentlichen mit dem der Welle (2) übereinstimmen.

6. Rotoranordnung nach einem der vorhergehenden Ansprüche, wobei die Rotoranordnung (1) eine Schmutzkappe (6) umfasst, die einen ringförmigen Spalt in dem Lager (7) neben dem Rotorkern (4) abdeckt, wobei die Schmutzkappe (6) an der Welle (2) gesichert ist und einen Flansch (19) umfasst, der sich zum Abdecken des ringförmigen Spalts von der Welle (2) radial nach außen erstreckt.

## Revendications

1. Agencement de rotor (1) comprenant un arbre (2) sur lequel sont montés une turbine (3), un noyau de rotor (4) et une cartouche de palier (5), la cartouche de palier (5) étant monte entre la turbine (3) et le noyau de rotor (4) et comprenant une paire de paliers (7, 8), un ressort (10) qui applique une précharge à chacun des paliers (7, 8) et un manchon (11) qui entoure les paliers (7, 8), **caractérisé en ce que** le manchon (11) présente un coefficient de dilatation thermique qui coïncide sensiblement avec celui de l'arbre (2), le manchon (11) est constitué d'un matériau non magnétique, et l'arbre (2) est constitué d'un matériau magnétique doux.

2. Agencement de rotor selon la revendication 1, dans lequel le manchon (11) est constitué d'un matériau électriquement isolant.

3. Agencement de rotor selon l'une quelconque des revendications précédentes, dans lequel le centre de masse de l'agencement de rotor (1) est situé à l'intérieur de la cartouche de palier (5).

4. Agencement de rotor selon l'une quelconque des revendications précédentes, dans lequel la cartouche de palier (5) comprend un espaceur (9) qui entoure l'arbre (2), sépare les deux paliers (7, 8) et contribue à la rigidité de l'arbre.

5. Agencement de rotor selon la revendication 4, dans lequel les paliers (7, 8) et l'espaceur (9) présentent des coefficients de dilatation thermique qui coïncident sensiblement avec celui de l'arbre (2).

6. Agencement de rotor selon l'une quelconque des revendications précédentes, dans lequel l'agencement de rotor (1) comprend un capot anti-poussière (6) qui couvre un espace annulaire dans le palier (7) à proximité du noyau de rotor (4), le capot anti-poussière (6) étant fixé à l'arbre (2) et comprenant une bride (19) qui s'étend radialement vers l'extérieur à partir de l'arbre (2) afin de couvrir l'espace annulaire.
